# NOUVEAU FASCICULE DE BREVET EUROPEEN

(11) **EP 3 380 399 B2**
(45) Date de publication et mention de la décision concernant l'opposition: **22.10.2025**
(45) Mention de la délivrance du brevet: 28.04.2021
(21) Numéro de dépôt: 16809999.2
(22) Date de dépôt: 21.11.2016
(51) Int. Cl.: B64D 27/14, B64D 27/20

(54) **AVION PROPULSÉ PAR UNE TURBOMACHINE MUNI D'UN ÉCRAN ACOUSTIQUE**
VON EINER TURBOMASCHINE MIT SCHALLWAND ANGETRIEBENES FLUGZEUG
AIRCRAFT POWERED BY A TURBOMACHINE PROVIDED WITH AN ACOUSTIC BAFFLE

(30) Priorité: 25.11.2015 FR 1561349
(43) Date de publication de la demande: 03.10.2018
(73) Titulaire: Safran Aircraft Engines, 75015 Paris (FR)
(72) Inventeur: JODET, Norman, Bruno, André, 77550 Moissy-Cramayel Cedex (FR); GONZALEZ, Jérémy, Paul, Francisco, 77550 Moissy-Cramayel Cedex (FR); ROLLAND, Hervé, 77550 Moissy-Cramayel Cedex (FR)
(74) Mandataire: Cabinet Beau de Loménie
(86) Numéro de dépôt international: PCT/FR2016/053028
(87) Numéro de publication internationale: WO 2017/089685

(56) Documents cités:
- WO-A1-2014/072615
- FR-A1- 2 892 705
- FR-A1- 2 898 583
- US-A1- 2008 142 641
- US-A1- 2012 138 736

## Description

### Arrière-plan de l'invention

La présente invention se rapporte au domaine général des avions propulsés par une turbomachine à double flux partiellement intégrée au fuselage de l'avion.

Les avions civils sont généralement équipés de turbomachines montées sous les ailes ou en position arrière sur le fuselage et y sont fixés par l'intermédiaire de pylônes.

Du fait du renchérissement du coût des carburants dans les années à venir, les motoristes cherchent à réduire la consommation de carburant des avions civils. L'une des façons qui est envisagée pour y parvenir est d'encastrer au moins partiellement les moteurs à l'intérieur du fuselage de l'avion pour supprimer les pylônes et les carénages des moteurs, ce qui diminue la masse de l'ensemble propulsif et réduit sa traînée. Les nuisances sonores de l'avion s'en trouvent également limitées.

Par ailleurs, en vol, une couche limite se forme autour du fuselage de l'avion et génère une traînée aérodynamique. Si, par le passé, il a été considéré que les moteurs ne devaient pas ingérer cette couche limite pour éviter une importante distorsion au niveau de la soufflante et des vibrations au niveau des arbres des moteurs, il est à présent considéré que l'absorption d'une partie de cette couche limite par les moteurs permettait de réduire la traînée aérodynamique de l'avion et d'abaisser la vitesse d'admission de l'air dans les moteurs avec un important gain de rendement propulsif.

On connaît ainsi le document WO 2014/072615 qui décrit une architecture d'avion équipé d'un turboréacteur intégré à l'arrière du fuselage et dont les entrées d'air sont reliées au fuselage de l'avion pour absorber une partie au moins de la couche limite formée autour du fuselage de l'avion.

Cette architecture présente de nombreux avantages. Elle permet notamment de réduire la traînée aérodynamique de l'avion (par rapport à une architecture classique à turbomachines montées sous les ailes ou en position arrière sur le fuselage). De plus, la vitesse de la couche limite étant faible, la vitesse d'admission de l'air dans la turbomachine et la vitesse d'éjection du flux gazeux issu de celui-ci seront réduits, ce qui autorise un rendement propulsif élevé et de faibles nuisances acoustiques.

L'architecture à turbomachine intégrée dans le fuselage de l'avion nécessite toutefois de respecter les normes en matière de certification acoustique qui visent aussi bien le bruit rayonné sous la trace de l'avion (pendant les phases d'approche) que le bruit rayonné latéralement. Le document US 2012/138736 A1 divulgue un exemple de l'art antérieur pour réduire le bruit d'une turbomachine installée à l'arrière du fuselage. Le document US 2008/142641 A1 divulgue des écrans acoustiques.

### Objet et résumé de l'invention

La présente invention a donc pour but principal de répondre à ce besoin en proposant un avion à turbomachine à une ou plusieurs soufflantes, intégrée à l'arrière du fuselage d'un avion dans le prolongement de celui-ci qui soit capable de respecter les normes de certification acoustique.

Conformément à l'invention, ce but est atteint grâce à un avion de ce type, tel que défini dans la revendication 1, comprenant en outre au moins un panneau formant écran acoustique raccordé au fuselage de l'avion et disposé sous la turbomachine.

L'invention propose d'exploiter le positionnement relatif entre la turbomachine et le fuselage de l'avion pour réduire le bruit rayonné par la turbomachine en intégrant un ou plusieurs panneaux formant un écran acoustique pour faire obstacle aux ondes acoustiques qui se propagent vers le sol. Grâce à la présence d'un tel panneau, il est ainsi possible de réduire le bruit rayonné par la turbomachine et de respecter ainsi les normes de certification acoustique. Notamment, il est possible de réduire le bruit rayonné de plus de 5 EPNdB (pour « Effective Perceived Noise Decibel » qui est l'unité de mesure utilisée dans les normes de certification acoustique aéronautique pour exprimer le niveau effectif de bruit perçu) sur tous les points de certification.

Plus précisément, les dimensions et le positionnement particulier du panneau sont ajustés de sorte à traiter principalement le bruit rayonné en amont de la turbomachine (c'est-à-dire le bruit provenant de l'interaction d'au moins une soufflantes avec les aubes directrices de sortie de soufflantes, ainsi que le bruit du compresseur).

Ainsi, dans un plan vertical passant par un axe longitudinal de la turbomachine, le panneau s'étend de préférence longitudinalement entre une extrémité amont et une extrémité aval, une droite passant par l'extrémité amont du panneau et un centre d'une entrée d'air de l'au moins une soufflante du turboréacteur formant un angle avec l'axe longitudinal de la turbomachine compris entre 30° et 80°, et une droite passant par l'extrémité aval du panneau et le centre de l'entrée d'air de l'au moins une soufflante de la turbomachine formant un angle avec l'axe longitudinal de la turbomachine compris entre 60° et 130°.

Avantageusement encore, l'angle formé entre la droite passant par l'extrémité amont du panneau et le centre de l'entrée d'air d'au moins une soufflante de la turbomachine est de 50°, et l'angle formé entre la droite passant par l'extrémité aval du panneau et le centre de l'entrée d'air de l'au moins une soufflante de la turbomachine est de 90°.

Toujours avantageusement, une distance séparant horizontalement un plan dans lequel est disposé le panneau et une nacelle entourant les soufflantes de la turbomachine est comprise entre 0,2 et 0,5 fois un diamètre desdites soufflantes. Une telle valeur présente un bon compromis entre la perturbation de l'écoulement qui alimente les soufflantes de la turbomachine et l'intégrabilité du panneau. En effet, si la distance entre le panneau et la nacelle est trop faible, la proximité du panneau avec l'entrée d'air risque de perturber l'alimentation des soufflantes. A l'inverse, si cette distance est trop élevée, les dimensions du panneau devront être plus importantes (notamment si l'on souhaite respecter les paramètres des angles α et β), ce qui complique sa fixation sur le fuselage de l'avion. En outre, dans ce cas, le positionnement en hauteur du panneau risque de ne pas être compatible avec les contraintes de garde au sol de l'avion requises en fonctionnement (notamment lors de la mise en incidence de l'avion lors des phases de décollage et d'approche).

Dans un plan sensiblement vertical et sensiblement perpendiculaire à l'axe longitudinal de la turbomachine, le panneau s'étend de préférence latéralement entre deux extrémités latérales, une droite passant par chaque extrémité latérale du panneau et un centre de l'entrée d'air de l'au moins une soufflante de la turbomachine formant un angle avec un axe sensiblement perpendiculaire à l'axe longitudinal de la turbomachine compris entre 60° et 90°. Un tel angle permet ainsi d'optimiser l'action du panneau dans le but de minimiser la propagation des ondes acoustiques et satisfaire au mieux les normes de certification acoustique relatives au bruit rayonné latéralement.

Dans ce cas, les extrémités latérales du panneau peuvent se terminer chacune par une ailette, ces ailettes étant orientées de sorte à refermer le panneau en direction de la turbomachine. La présence de ces ailettes permet ainsi de respecter ces normes de certification acoustique tout en limitant l'encombrement latéral du panneau.

Le panneau peut présenter une forme symétrique par rapport à un plan sensiblement vertical passant par un axe longitudinal de la turbomachine. Dans ce cas, le panneau peut présenter un profil en pointe avec une flèche positionnée dans le prolongement de l'axe longitudinal de la turbomachine, ce qui permet de répondre aux contraintes aérodynamiques inhérentes à la présence d'un tel panneau.

De préférence encore, le panneau présente, dans un plan sensiblement vertical et sensiblement perpendiculaire à l'axe longitudinal, une section droite en forme d'aile d'avion. Ainsi, l'incidence d'un tel panneau sur la trainée aérodynamique de l'avion peut être minimisée. De même, avec la présence d'un tel panneau, l'avion peut être dépourvu de plan canard à l'avant (cette fonctionnalité pouvant être remplie par le panneau).

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et en perspective d'un avion civil conforme à l'invention ;
- la figure 2 représente, en coupe longitudinale, un exemple de turbomachine propulsant l'avion de la figure 1 ; et
- les figures 3A à 3C sont des vues en coupe de l'avion de la figure selon différents plans montrant les dimensions et le positionnement du panneau formant écran acoustique par rapport à la turbomachine.

### Description détaillée de l'invention

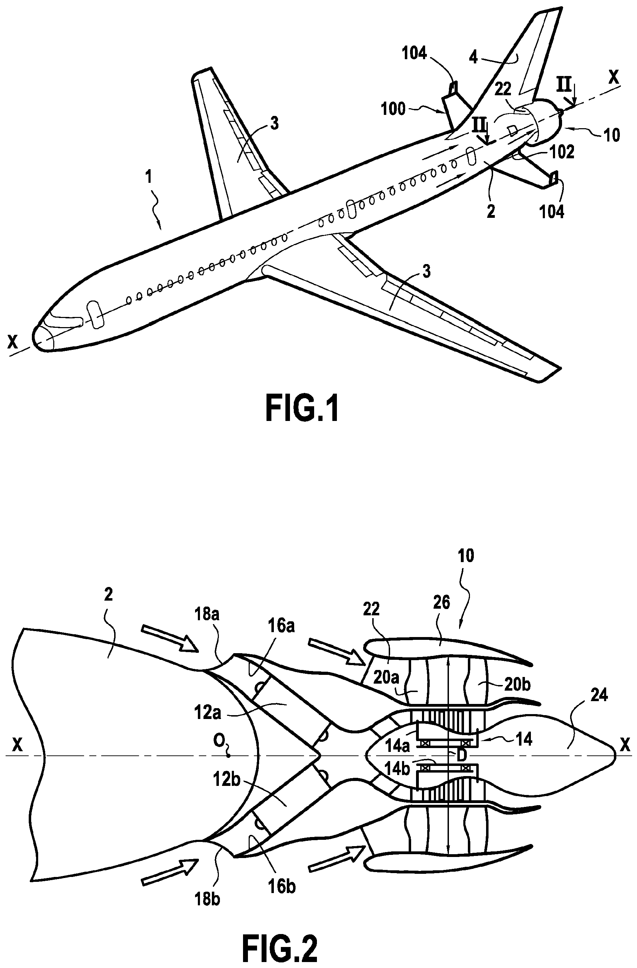

La figure 1 représente un avion 1 conforme l'invention. Cet avion est équipé d'une turbomachine 10 qui est intégré à l'arrière du fuselage 2 de l'avion dans le prolongement de celui-ci.

La figure 2 représente un exemple d'architecture d'une telle turbomachine 10. On pourra se référer au document WO 2014/072615 qui décrit en détails un tel exemple d'architecture, étant noté que l'invention ne se limite pas à ce type d'architecture de turbomachine (le nombre de soufflantes peut notamment être différent de deux, par exemple être de une)

Typiquement, la turbomachine 10 est centrée sur un axe longitudinal X-X du fuselage 2 de l'avion et comprend notamment, d'amont en aval dans le sens d'écoulement des gaz, deux générateurs de gaz distincts 12a, 12b montés en parallèle qui alimentent une unique turbine de travail 14. Dans la suite de la description, l'axe X-X est également l'axe longitudinal de la turbomachine.

De façon connue en soi, chaque générateur de gaz 12a, 12b comprend un compresseur basse-pression, un compresseur haute-pression, une chambre de combustion, une turbine basse-pression et une turbine haute-pression (non représentés sur les figures).

De plus, chaque générateur de gaz 12a, 12b est logé à l'intérieur d'une veine d'écoulement primaire 16a, 16b. Ces deux veines d'écoulement primaire peuvent former entre elles un V ouvert vers l'amont et convergeant sur l'axe longitudinal X-X.

Un mélangeur (non représenté sur les figures) est positionné au niveau de la zone de convergence des deux veines d'écoulement primaire 16a, 16b. Ce mélangeur a pour fonction de mélanger les flux gazeux issus des deux générateurs de gaz pour créer un flux gazeux unique homogène à destiné à alimenter un module de turbine de travail 14 (composé de plusieurs rotors coaxiaux et contrarotatifs).

Des entrées d'air distinctes 18a, 18b pour alimenter chaque générateur de gaz peuvent également être prévues. Ces entrées d'air sont reliées au fuselage 2 de l'avion de façon à absorber une partie au moins de la couche limite formée autour du fuselage de l'avion. Plus précisément, leur paroi interne est directement intégrée au fuselage de l'avion.

La turbine de travail 14 qui est alimentée par les deux générateurs de gaz est munie de deux rotors de turbine 14a, 14b contrarotatifs pour entraîner en rotation de façon contrarotative deux soufflantes 20a, 20b disposées à l'arrière de la turbomachine et montées en série dans une veine d'écoulement secondaire 22. Ces rotors de turbine sont coaxiaux et centrés sur l'axe longitudinal X-X. La turbine de travail 14 est quant à elle logée à l'intérieur d'une structure (non représentée sur les figures) située à l'intérieur du fuselage, ce dernier supportant également un corps central 24 annulaire de révolution autour de l'axe longitudinal X-X.

Les deux soufflantes 20a, 20b sont carénées par une nacelle 26 fixée directement sur l'empennage vertical 4 de l'avion. Ces soufflantes présentent par exemple un diamètre externe D qui correspond sensiblement au diamètre le plus élevé du fuselage 2 de l'avion.

Selon l'invention, l'avion 1 comprend en outre au moins un panneau 100 formant écran acoustique qui est raccordé directement au fuselage 2 de l'avion (de la même manière que le sont les ailes 3 de l'avion).

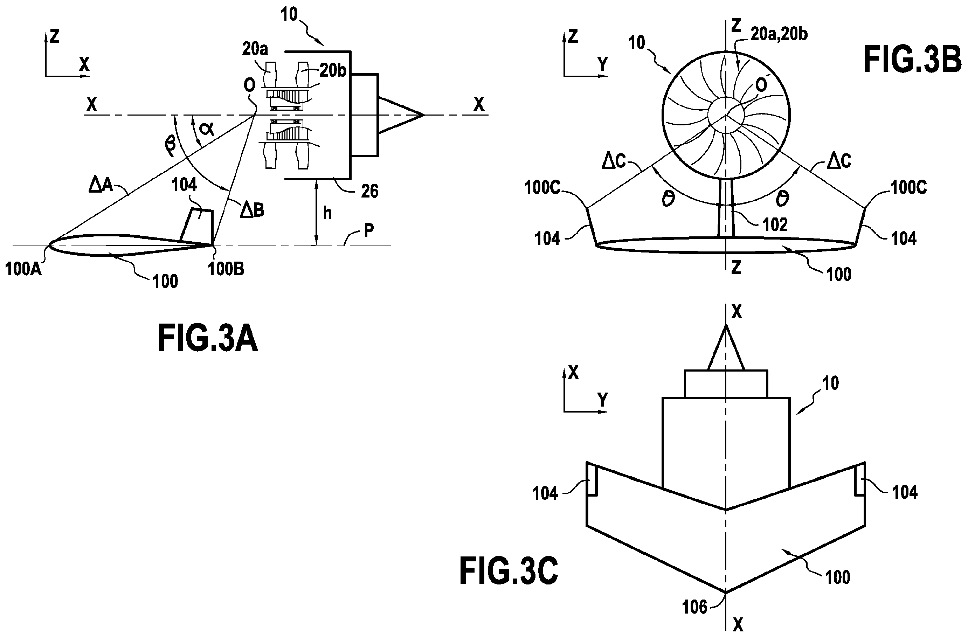

Ce panneau 100 est disposé sous la turbomachine 10 dans un plan P (figure 3A) parallèle à l'axe longitudinal X-X de la turbomachine (ce plan P étant un plan sensiblement horizontal lorsque l'avion est au sol). Il présente un profil aérodynamique et peut être équipé de systèmes de becs et de volets (non représentés) pour assurer des fonctions liées à la mécanique du vol (par exemple de mise en incidence de l'avion).

Les dimensions et le positionnement particulier du panneau 100 sont ajustés de sorte à traiter principalement le bruit rayonné en amont du turboréacteur.

Ainsi, comme représenté sur la figure 3A, dans un plan de coupe vertical XZ passant par l'axe longitudinal X-X de la turbomachine (le plan XZ est un plan longitudinal à la turbomachine), le panneau s'étend longitudinalement entre une extrémité amont 100A et une extrémité aval 100B.

Dans ce plan vertical XZ, une droite ΔA passant par l'extrémité amont 100A du panneau et un centre O d'entrée d'air des soufflantes 20a, 20b de la turbomachine (ici le centre O est situé sur l'axe X-X et positionné au niveau de la section de l'entrée d'air de la turbomachine, à l'extrémité amont de la nacelle 26 entourant les soufflantes) forme un angle α avec l'axe longitudinal X-X qui est compris entre 30° et 80°, et de préférence égal à 50°.

De même, la droite ΔB passant par l'extrémité aval 100B du panneau et le centre O de l'entrée d'air des soufflantes 20a, 20b de la turbomachine forme un angle β avec l'axe longitudinal X-X de la turbomachine qui est compris entre 60° et 130°, et de préférence égal à 90°.

De plus, la distance h séparant horizontalement le plan P dans lequel est disposé le panneau 100 et la nacelle 26 entourant les soufflantes 20a, 20b de la turbomachine est de préférence comprise entre 0,2 et 0,5 fois le diamètre D desdites soufflantes. Une telle valeur pour la distance h représente un bon compromis entre la perturbation de l'écoulement qui alimente les soufflantes de la turbomachine et l'intégrabilité du panneau sur le fuselage de l'avion.

Par ailleurs, selon la valeur pour la distance h, il est possible de renforcer la structure avec un ou plusieurs pylônes de renforcement 102 qui se présentent sous la forme d'éléments structuraux permettant de raccorder le panneau 100 au fuselage 2 de l'avion (voir les figures 1 et 3B).

Comme représenté sur la figure 3B, dans un plan de coupe vertical YZ perpendiculaire au plan XZ et à l'axe longitudinal X-X de la turbomachine (ce plan YZ est un plan transversal à la turbomachine), le panneau 100 s'étend latéralement entre deux extrémités latérales 100C.

Dans ce plan vertical YZ, les droites ΔC passant par chaque extrémité latérale 100C du panneau et le centre O des soufflantes de la turbomachine forment un angle θ avec un axe vertical Z-Z de la turbomachine qui est de préférence compris entre 60° et 90°. Un tel angle permet d'optimiser l'action du panneau dans le but de minimiser la propagation des ondes acoustiques et satisfaire au mieux les normes de certification acoustique relatives au bruit rayonné latéralement.

De façon à respecter ce critère d'angle θ tout en évitant que le panneau 100 ne soit trop encombrant latéralement, les extrémités latérales 100C du panneau peuvent avantageusement se terminer chacune par une ailette 104 (appelée « winglet » en anglais) faisant partie intégrante du panneau, ces ailettes étant orientées de sorte à refermer le panneau en direction du turboréacteur.

La figure 3C représente l'assemblage panneau/ turbomachine dans un plan de coupe horizontal XY (ce plan XY est un plan longitudinal à la turbomachine). Dans ce plan horizontal XY, le panneau 100 présente avantageusement une forme qui est symétrique par rapport à l'axe longitudinal X-X de la turbomachine 10 (c'est-à-dire que le panneau présente une forme symétrique par rapport au plan vertical XZ).

Dans ce cas, le panneau 100 peut présenter un profil en pointe avec une flèche 106 positionnée dans le prolongement de l'axe longitudinal X-X de la turbomachine de sorte à conférer au panneau 100 un profil aérodynamique.

De même, dans le plan vertical XZ de la figure 3A, la section droite du panneau 100 est avantageusement semblable à celle d'une aile d'avion et sa portance peut être adaptée à un besoin de mécanique du vol.

De plus, la structure du panneau et les matériaux utilisés pour le réaliser sont avantageusement favorables à la réflexion des ondes acoustiques. Par exemple, on pourra utiliser comme matériau de l'aluminium, un matériau composite léger (de type fibres de verre ou de carbone imprégnées de résine, etc.), ou une combinaison de ces matériaux. De manière générale, le matériau doit disposer d'une porosité très faible pour faire obstacle à la propagation des ondes acoustiques et d'une bonne résistance mécanique (pour des raisons de sécurité). En outre, la surface externe du panneau est réalisée de sorte à minimiser les efforts de frottement.

On notera qu'avec la présence d'un tel panneau formant écran acoustique, l'avion selon l'invention peut être avantageusement dépourvu de plan-canard. Certains avions peuvent posséder deux surfaces portantes, un plan-canard à l'avant, généralement porteur, et une aile principale placée à l'arrière. La surface du plan-canard produit normalement une portance positive (vers le haut) qui s'ajoute à celle produite par l'aile principale. Avec l'architecture de l'avion selon l'invention, le plan-canard n'est plus nécessaire, sa fonction de portance positive étant réalisée par le panneau formant écran acoustique.

On notera également que le panneau décrit ci-avant peut être composé de plusieurs panneaux. Par exemple, dans le cas d'un fuselage très proche de l'entrée d'air de la turbomachine, il est possible de recourir à plusieurs panneaux disposés en escalier afin de tenir compte de l'encombrement du fuselage. Dans un tel cas, les paramètres de dimensionnement de ces panneaux multiples sont les mêmes que ceux décrits précédemment pour un seul panneau.

On notera encore que le panneau (ou les panneaux) n'est pas nécessairement plan comme décrit ci-avant. En particulier, il est possible de recourir à un panneau courbé ou plusieurs panneaux qui ne sont pas contenus dans un même plan horizontal (mais qui forment par exemple un V). Il est encore possible de recourir à un panneau constitué de plusieurs profils dont la corde est parallèle à l'axe longitudinal de la turbomachine (la corde d'un profil étant définie comme la droite qui relie le bord d'attaque au bord de fuite du profil).

## Revendications

1. Avion (1) propulsé par une turbomachine (10) à au moins une soufflante, la turbomachine étant intégrée à l'arrière d'un fuselage (2) de l'avion dans le prolongement de celui-ci et centrée sur un axe longitudinal (X-X) du fuselage, l'axe (X-X) étant également l'axe longitudinal de la turbomachine (10), ladite au moins une soufflante comprenant une entrée d'air avec un centre (○) situé sur ledit axe longitudinal (X-X) de la turbomachine (10), l'avion comprend en outre au moins un panneau (100) formant écran acoustique raccordé au fuselage de l'avion et disposé sous la turbomachine, en outre dans un plan vertical (XZ) passant par l'axe longitudinal (X-X) de la turbomachine, le panneau (100) s'étend longitudinalement entre une extrémité amont (100A) et une extrémité aval (100B), une droite (ΔA) passant par l'extrémité amont du panneau et le centre (O) de l'entrée d'air d'au moins une soufflante de la turbomachine (20a, 20b) formant un angle (α) avec l'axe longitudinal (X-X) de la turbomachine compris entre 30° et 80°, et une droite (ΔB) passant par l'extrémité aval du panneau et le centre (O) de l'entrée d'air d'au moins une soufflante de la turbomachine formant un angle (β) avec l'axe longitudinal (X-X) de la turbomachine compris entre 60° et 130°.

2. Avion selon la revendication 1, **caractérisé en ce que** l'angle (α) formé entre la droite (ΔA) passant par l'extrémité amont du panneau et le centre de l'entrée d'air d'au moins une soufflante de la turbomachine est de 50°, et l'angle (β) formé entre la droite (ΔB) passant par l'extrémité aval du panneau et le centre de l'entrée d'air d'au moins une soufflante de la turbomachine est de 90°.

3. Avion selon la revendication 1 ou 2, **caractérisé en ce qu'**une distance (h) séparant horizontalement un plan (P) dans lequel est disposé le panneau et une nacelle (26) entourant l'au moins une soufflante de la turbomachine est comprise entre 0,2 et 0,5 fois un diamètre (D) desdites soufflantes.

4. Avion selon l'une quelconque des revendications 1 à 3, **caractérisé en ce que**, dans un plan sensiblement vertical (YZ) et sensiblement perpendiculaire à l'axe longitudinal (X-X) de la turbomachine, le panneau s'étend latéralement entre deux extrémités latérales (100C), une droite (ΔC) passant par chaque extrémité latérale du panneau et un centre (○) d'une entrée d'air d'au moins une soufflante de la turbomachine formant un angle (θ) avec un axe (Z-Z) sensiblement perpendiculaire à l'axe longitudinal (X-X) de la turbomachine compris entre 60° et 90°.

5. Avion selon la revendication 4, **caractérisé en ce que** les extrémités latérales (100C) du panneau se terminent chacune par une ailette (104), ces ailettes étant orientées de sorte à refermer le panneau en direction de la turbomachine.

6. Avion selon l'une quelconque des revendications 1 à 5, **caractérisé en ce que** le panneau présente une forme symétrique par rapport à un plan sensiblement vertical (XZ) passant par un axe longitudinal (X-X) de la turbomachine.

7. Avion selon la revendication 6, **caractérisé en ce que** le panneau présente un profil en pointe avec une flèche (106) positionnée dans le prolongement de l'axe longitudinal (X-X) de la turbomachine.

8. Avion selon l'une quelconque des revendications 1 à 7, **caractérisé en ce que** le panneau présente, dans un plan sensiblement vertical sensiblement perpendiculaire à l'axe longitudinal (X-X), une section droite en forme d'aile d'avion.

9. Avion selon l'une quelconque des revendications 1 à 8, **caractérisé en ce qu'**il est dépourvu de plan canard à l'avant.

## Patentansprüche

1. Flugzeug (1), das von einer Turbomaschine (10) mit mindestens einem Bläser angetrieben wird, wobei die Turbomaschine im hinteren Teil eines Rumpfs (2) des Flugzeugs in dessen Verlängerung integriert und auf einer Längsachse (X-X) des Rumpfs zentriert ist, wobei die Achse (X-X) ebenfalls die Längsachse der Turbomaschine (10) ist, wobei der mindestens eine Bläser einen Lufteinlass mit einer Mitte (O) umfasst, die sich auf der Längsachse (X-X) der Turbomaschine (10) befindet, wobei das Flugzeug ferner mindestens eine Platte (100) umfasst, die eine Schallwand bildet, die am Rumpf des Flugzeugs angebracht und unter der Turbomaschine angeordnet ist, ferner in einer vertikalen Ebene (XZ), die durch die Längsachse (X-X) der Turbomaschine verläuft, wobei sich die Platte (100) längs zwischen einem stromaufwärtigen Ende (100A) und einem stromabwärtigen Ende (100B) erstreckt, wobei eine Gerade (ΔA) durch das stromaufwärtige Ende der Platte und die Mitte (O) des Lufteinlasses mindestens eines Bläsers der Turbomaschine (20a, 20b) verläuft, die einen Winkel (α) mit der Längsachse (X-X) der Turbomaschine bildet, der zwischen 30° und 80° liegt, und eine Gerade (ΔB) durch das stromabwärtige Ende der Platte und die Mitte (O) des Lufteinlasses mindestens eines Bläsers der Turbomaschine verläuft, die einen Winkel (β) mit der Längsachse (X-X) der Turbomaschine bildet, der zwischen 60° und 130° liegt.

2. Flugzeug nach Anspruch 1, **dadurch gekennzeichnet, dass** der zwischen der Geraden (ΔA), die durch das stromaufwärtige Ende der Platte und die Mitte des Lufteinlasses mindestens eines Bläsers der Turbomaschine verläuft, gebildete Winkel (α) 50° beträgt und der zwischen der Geraden (ΔB), die durch das stromabwärtige Ende der Platte und die Mitte des Lufteinlasses mindestens eines Bläsers der Turbomaschine verläuft, gebildete Winkel (β) 90° beträgt.

3. Flugzeug nach Anspruch 1 oder 2, **dadurch gekennzeichnet, dass** ein Abstand (h), der eine Ebene (P), in der die Platte angeordnet ist, und eine Gondel (26), die den mindestens einen Bläser der Turbomaschine umgibt, horizontal trennt, zwischen dem 0,2- und 0,5-fachen eines Durchmessers (D) der Bläser liegt.

4. Flugzeug nach einem der Ansprüche 1 bis 3, **dadurch gekennzeichnet, dass** sich die Platte in einer etwa vertikalen und etwa senkrechten Ebene (YZ) zur Längsachse (X-X) der Turbomaschine seitlich zwischen zwei seitlichen Enden (100C) erstreckt, wobei eine Gerade (ΔC) durch jedes seitliche Ende der Platte und eine Mitte (O) eines Lufteinlasses mindestens eines Bläsers der Turbomaschine verläuft, die mit einer Achse (Z-Z), die etwa senkrecht zur Längsachse (X-X) der Turbomaschine ist, einen Winkel (θ) bildet, der zwischen 60° und 90° liegt.

5. Flugzeug nach Anspruch 4, **dadurch gekennzeichnet, dass** die seitlichen Enden (100C) der Platte jeweils in einem Flügel (104) enden, wobei diese Flügel derart ausgerichtet sind, dass sie die Platte in Richtung der Turbomaschine einschließen.

6. Flugzeug nach einem der Ansprüche 1 bis 5, **dadurch gekennzeichnet, dass** die Platte eine symmetrische Form in Bezug auf eine etwa vertikale Ebene (XZ) aufweist, die durch eine Längsachse (X-X) der Turbomaschine verläuft.

7. Flugzeug nach Anspruch 6, **dadurch gekennzeichnet, dass** die Platte ein spitzes Profil mit einer Spitze (106) aufweist, die in der Verlängerung der Längsachse (X-X) der Turbomaschine positioniert ist.

8. Flugzeug nach einem der Ansprüche 1 bis 7, **dadurch gekennzeichnet, dass** die Platte in einer etwa vertikalen Ebene etwa senkrecht zur Längsachse (X-X) einen geraden Abschnitt in Form eines Flugzeugflügels aufweist.

9. Flugzeug nach einem der Ansprüche 1 bis 8, **dadurch gekennzeichnet, dass** es vorn keine Entenebene hat.

## Claims

1. An airplane (1) propelled by a turbine engine (10) having at least one fan, the turbine engine being integrated in the rear of a fuselage (2) of the airplane, extending it rearwards and being centered on a longitudinal axis (X-X) of the fuselage, the axis (X-X) being also the longitudinal axis of the turbine engine (10), said at least one fan comprising an air inlet with a center (○) located on said longitudinal axis (X-X) of the turbine engine (10), the airplane further comprising at least one panel (100) forming an acoustic baffle and connected to the fuselage of the airplane and arranged below the turbine engine,
and in a vertical plane (XZ) containing the longitudinal axis (X-X) of the turbine engine, the panel (100) extends longitudinally between an upstream end (100A) and a downstream end (100B), a straight line (ΔA) passing through the upstream end of the panel and the center (○) of the air inlet of at least one fan (20a, 20b) of the turbine engine forming an angle (α) with the longitudinal axis (X-X) of the turbine engine that lies in the range 30° to 80°, and a straight line (ΔB) passing through the downstream end of the panel and the center (○) of the air inlet of at least one fan of the turbine engine forming an angle (β) with the longitudinal axis (X-X) of the turbine engine lying in the range 60° to 130°.

2. An airplane according to claim 1, **characterized in that** the angle (α) formed between the straight line (ΔA) passing through the upstream end of the panel and the center of the air inlet of at least one fan of the turbine engine is 50°, and the angle (β) formed between the straight line (ΔB) passing through the downstream end of the panel and the center of the air inlet of at least one fan of the turbine engine is 90°.

3. An airplane according to claim 1 or claim 2, **characterized in that** a distance (h) lying horizontally between a plane (P) in which the panel is arranged and a nacelle (26) surrounding at least one fan of the turbine engine lies in the range 0.2 times to 0.5 times a diameter (D) of said fan.

4. An airplane according to any one of claims 1 to 3, **characterized in that**, in a plane (YZ) that is substantially vertical and substantially perpendicular to the longitudinal axis (X-X) of the turbine engine, the panel extends laterally between two lateral ends (100C), a straight line (ΔC) passing through each lateral end of the panel and a center (○) of the air inlet of at least one fan of the turbine engine forming an angle (θ) with an axis (Z-Z) substantially perpendicular to the longitudinal axis (X-X) of the turbine engine that lies in the range 60° to 90°.

5. An airplane according to claim 4, **characterized in that** each lateral end (100C) of the panel is terminated by a respective winglet (104), the winglets being oriented so as to bring the panel towards the turbine engine.

6. An airplane according to any one of claims 1 to 5, **characterized in that** the panel presents a shape that is symmetrical relative to a substantially vertical plane (XZ) containing a longitudinal axis (X-X) of the turbine engine.

7. An airplane according to claim 6, **characterized in that** the panel presents a pointed profile with a tip (106) positioned extending the longitudinal axis (X-X) of the turbine engine.

8. An airplane according to any one of claims 1 to 7, **characterized in that**, in a substantially vertical plane that is substantially perpendicular to the longitudinal axis (X-X), the panel presents a right section in the form of an airplane wing.

9. An airplane according to any one of claims 1 to 8, **characterized in that** it does not have a canard foil at the front.
